(19) Europäisches Patentamt
European Patent Office
Office européen des brevets

(11) EP 4 765 410 A1

(12) EUROPEAN PATENT APPLICATION
published in accordance with Art. 153(4) EPC

(43) Date of publication:
24.06.2026 Bulletin 2026/26

(21) Application number: 24894697.2

(22) Date of filing: 22.11.2024

(51) International Patent Classification (IPC):
H01M 50/30 (2021.01)     H01M 50/105 (2021.01)
H01M 50/126 (2021.01)    H01M 50/183 (2021.01)
H01M 50/184 (2021.01)    H01M 50/186 (2021.01)

(52) Cooperative Patent Classification (CPC):
H01M 50/105; H01M 50/126; H01M 50/183;
H01M 50/184; H01M 50/186; H01M 50/30;
Y02E 60/10

(86) International application number:
PCT/KR2024/018667

(87) International publication number:
WO 2025/110806 (30.05.2025 Gazette 2025/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.11.2023 KR 20230163759
20.12.2023 KR 20230187454
20.12.2023 KR 20230187455

(71) Applicant: LG Energy Solution, Ltd.
Seoul 07335 (KR)

(72) Inventors:
• JU, Hye Yeong
  Daejeon 34122 (KR)
• HWANG, Ji Young
  Daejeon 34122 (KR)
• PARK, Eun Suk
  Daejeon 34122 (KR)
• LEE, Yu Jin
  Daejeon 34122 (KR)
• KIM, Sang Hun
  Daejeon 34122 (KR)
• YU, Hyung Kyun
  Daejeon 34122 (KR)

(74) Representative: Plasseraud IP
104 Rue de Richelieu
CS92104
75080 Paris Cedex 02 (FR)

(54) POUCH-TYPE BATTERY CASE AND POUCH-TYPE SECONDARY BATTERY INCLUDING SAME

(57) A pouch type battery case according to the present invention includes a cup portion provided with an accommodation space for accommodating an electrode assembly, a terrace portion formed along a perimeter of the accommodation portion, and at least one gas discharge portion, wherein the gas discharge portion is provided in at least one position among the cup portion and the terrace portion, each gas discharge portion includes at least one through hole and a gas permeable film covering the through hole, the gas permeable film includes an adhesive resin layer and a permeable resin layer disposed on the adhesive resin layer, the gas permeable film is sealed to the battery case to form a sealing region around the through hole, and each gas discharge portion has a water blocking index (WBI) of 2.0 to 10.5, and the gas discharge portion satisfying the water blocking index described above exhibits excellent performance in preventing water penetration from the outside and electrolyte leakage while continuously discharging gas, thereby providing a pouch type secondary battery having improved safety and lifespan.

EP 4 765 410 A1

[FIG. 2]

**Description**

## TECHNICAL FIELD

The present invention relates to a pouch type battery case and a pouch type secondary battery including the same, and more particularly, to a pouch type battery case including a gas discharge portion exhibiting superior water blocking performance, and a pouch type secondary battery including the same.

## BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickelhydrogen batteries, lithium ion batteries, and lithium ion polymer batteries.

The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified into pouch type secondary batteries and can type secondary batteries according to a material of a case accommodating an electrode assembly. In particular, the pouch type batteries may be manufactured by performing press processing on a ductile pouch film laminate to form a cup portion, and then accommodating an electrode assembly in an accommodation space inside the cup portion and sealing a sealing portion.

The pouch type secondary batteries may generate gas inside a pouch when operated at high temperatures, overcharged, or brought with a short circuit. When the gas pressure inside the pouch increases, the pouch may get vented to explode or ignite. To overcome the limitations described above, a component designed to continuously discharge gas without stopping battery operation is required.

Although extensive research is underway to incorporate valve type gas discharge components for discharging gas generated inside batteries, most valve type gas discharge components are made of heavy materials and require high operating pressure, often failing to address swelling induced by gas generation.

Accordingly, efforts are being made to develop a gas discharge component by modifying a lead film in an electrode lead portion or by punching a hole in a portion of a battery case and sealing the hole with a gas permeable film to allow only gas to pass through while preventing the migration of moisture and electrolyte.

However, in the case of a film that allows only gas to pass through as described above, depending on the material used, when gas permeability is high, a greater chance of liquid penetration and poor adhesion to the battery case are concerns, and when the chances of liquid penetration are to be reduced to zero, the desired level of gas discharge performance is not achievable.

In addition, the dimensional characteristics of elements constituting the gas discharge component cause variations in gas discharge performance or liquid blocking performance, and given specific dimensions that may affect gas discharge performance have not been clearly identified, in-depth research is required to develop a gas discharge component exhibiting superior performance.

## DISCLOSURE OF THE INVENTION

## TECHNICAL PROBLEM

The present invention is designed to overcome the limitations described above, and thus, an aspect of the present invention provides a pouch type battery case exhibiting excellent performance in blocking water and minimizing electrolyte leakage while also ensuring effective gas discharge by defining a water blocking index through the design dimensions of a through hole in communication with the inside and outside of the case forming a gas discharge portion and a gas permeable film covering the through hole.

In addition, the present invention is designed to overcome the limitations described above, and thus, another aspect of the present invention provides a pouch type secondary battery exhibiting superior safety and enhanced lifespan by applying the pouch type battery case described above.

## TECHNICAL SOLUTION

[1] According to an aspect of the present invention, there is provided a pouch type battery case including a cup portion provided with an accommodation space for accommodating an electrode assembly, a terrace portion formed along a perimeter of the accommodation portion, and at least one gas discharge portion, wherein the gas discharge portion is provided in at least one position among the cup portion and the terrace portion, each gas discharge portion includes at least one through hole and a gas permeable film covering the through hole, the gas permeable film includes an adhesive resin layer and a permeable resin layer disposed on the adhesive resin layer, the gas permeable film is sealed to the battery case to form a sealing region around the through hole, and the gas discharge portion has a water blocking index (WBI) of 2.0 to 10.5, as indicated by Equation 1 below.

$$[Equation\ 1]$$

$$WBI = (A_S \times T_F \times T_T) / (A_H \times T_A \times 100)$$

In Equation 1 above, $A_S$ is an area (mm$^2$) of the sealing region, given as a unitless number, $T_F$ is a total thickness ($\mu$m) of the gas permeable film, given as a unitless number, $T_A$ is a thickness ($\mu$m) of the adhesive resin layer, given as a unitless number, $T_T$ is a thickness ($\mu$m) of the permeable resin layer, given as a unitless number, and $A_H$ is an area (mm$^2$) of the through hole, given as a unitless number.

[2] The present invention provides the pouch type battery case according to [1] above, wherein the water blocking index (WBI) may range from 2.3 to 10.0.

[3] The present invention provides the pouch type battery case according to [1] and/or [2] above, wherein the adhesive resin layer may include a non-fluorinated polyolefin-based resin.

[4] The present invention provides the pouch type battery case according to at least one of [1] to [3] above, wherein the permeable resin layer may include a fluorinated polyolefin-based resin.

[5] The present invention provides the pouch type battery case according to at least one of [1] to [4] above, wherein the gas permeable film may have a thickness ($T_F$) of 80 $\mu$m to 500 $\mu$m.

[6] The present invention provides the pouch type battery case according to at least one of [1] to [5] above, wherein a ratio ($T_A/T_T$) of the thickness ($T_A$) of the adhesive resin layer to the thickness ($T_T$) of the permeable resin layer may range from 0.4 to 2.0.

[7] The present invention provides the pouch type battery case according to at least one of [1] to [6] above, wherein a ratio ($T_A/T_T$) of the thickness ($T_A$) of the adhesive resin layer to the thickness ($T_T$) of the permeable resin layer may range from 0.4 to 1.2.

[8] The present invention provides the pouch type battery case according to at least one of [1] to [7] above, wherein the adhesive resin layer may have a thickness ($T_A$) of 20 $\mu$m to 250 $\mu$m.

[9] The present invention provides the pouch type battery case according to at least one of [1] to [8] above, wherein the permeable resin layer may have a thickness ($T_T$) of 30 $\mu$m to 200 $\mu$m.

[10] The present invention provides the pouch type battery case according to at least one of [1] to [9] above, wherein the through hole may have an area ($A_H$) of 5 mm$^2$ to 25 mm$^2$.

[11] The present invention provides the pouch type battery case according to at least one of [1] to [10] above, wherein the sealing portion may have an area ($A_{AD}$) of 10 mm$^2$ to 40 mm$^2$.

[12] The present invention provides the pouch type battery case according to at least one of [1] to [11] above, wherein the gas discharge portion may be formed in at least one position selected from among the terrace portion, and the cup portion positioned adjacent to the terrace portion and having no internal contact with the electrode assembly.

[13] The present invention provides the pouch type battery case according to at least one of [1] to [12] above, wherein the gas discharge portion may be disposed such that the adhesive resin layer comes into contact with the pouch type battery case.

[14] The present invention provides the pouch type battery case according to at least one of [1] to [13] above, wherein the pouch type battery case may have a structure in which a base layer, a gas barrier layer, and a sealant layer are sequentially stacked from an outer side.

[15] According to another aspect of the present invention, there is provided a pouch type secondary battery including an electrode assembly, a pouch type battery case described above, an electrode lead connected to the electrode assembly and protruding to the outside of the pouch type battery case via the terrace portion, and a lead film disposed between the electrode lead and the pouch type battery case on the terrace portion, wherein a portion of the terrace portion is sealed along a perimeter of a cup portion to form a sealing portion.

## ADVANTAGEOUS EFFECTS

A pouch type battery case according to the present invention may be achieved as a pouch type battery case having a gas discharge portion keeping gas discharge to at least an appropriate level and exhibiting excellent performance in blocking water and minimizing electrolyte leakage by defining a water blocking index through the design dimensions of a through hole in communication with the inside and outside of the case forming a gas discharge portion and a gas permeable film covering the through hole.

In addition, a pouch type secondary battery according to the present invention may exhibit superior safety and enhanced durability, contributing to improved lifespan by applying the pouch type battery case described above.

## BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.

FIG. 1 is an exploded view of a pouch type secondary battery;
FIG. 2 is a plan view of a pouch type secondary battery;
FIG. 3 is a cross-sectional view of a portion in which a gas discharge portion is provided in a pouch type secondary battery;
FIG. 4 is an enlarged cross-sectional view of a portion in which a gas discharge portion is provided in a pouch type secondary battery;
FIG. 5 is a plan view of a pouch type secondary battery in which a plurality of gas discharge portions are formed;
FIG. 6 is an enlarged plan view of a pouch type secondary battery for region A of FIG. 5;
FIG. 7 is an enlarged plan view of a pouch type secondary battery for a portion of region A of FIG. 5; and
FIG. 8 is an enlarged plan view of a pouch type secondary battery for a portion of region A of FIG. 5.

## MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the present invention but for describing embodiments. As used herein, singular terms are intended to include plural forms as well, unless the context clearly indicates otherwise. The meaning of "comprises" and/or "comprising" as used herein does not exclude the presence or addition of one or more other components besides a mentioned component.

As used herein, when an element "includes" a component, it may indicate that the element does not exclude another component unless explicitly described to the contrary, but may further include another component.

As used herein, the description "A and/or B" refers to A or B, or A and B.

As used herein, "%" indicates wt% unless indicated otherwise.

A pouch type battery case and a pouch type secondary battery described herein may include at least one of the technical components, which will be described later, and may include any combination of technically feasible components among the following technical components.

## Pouch type battery case

## Embodiment 1

A pouch type battery case according to embodiment 1 includes a cup portion provided with an accommodation space for accommodating an electrode assembly, a terrace portion formed along a perimeter of the accommodation portion, and at least one gas discharge portion, where the gas discharge portion is formed in at least one position among the cup portion and the terrace portion, each gas discharge portion includes at least one through hole and a gas permeable film covering the through hole, the gas permeable film includes an adhesive resin layer and a permeable resin layer disposed on the adhesive resin layer, the gas permeable film is sealed to the battery case to form a sealing region around the through hole, and the gas discharge portion has a water blocking index (WBI) of 2.0 to 10.5, as indicated by Equation 1

below.

[Equation 1]

$$WBI = (A_S \times T_F \times T_T) / (A_H \times T_A \times 100)$$

In Equation 1 above, $A_S$ is an area (mm$^2$) of the sealing region, given as a unitless number, $T_F$ is a total thickness (μm) of the gas permeable film, given as a unitless number, $T_A$ is a thickness (μm) of the adhesive resin layer, given as a unitless number, $T_T$ is a thickness (μm) of the permeable resin layer, given as a unitless number, and $A_H$ is an area (mm$^2$) of the through hole, given as a unitless number.

Generally, the gas discharge performance of a gas discharge portion is determined by the properties of materials constituting the gas discharge portion. The properties of materials may dictate moisture penetration prevention performance and electrolyte leakage prevention performance, and gas permeability, which also varies depending on materials, thus makes materials constituting the gas discharge portion a deciding factor.

However, while materials are significant, it is evident that there are areas that are not determined by materials, and factors that may improve gas discharge performance independent of materials, and thus the present invention intends to introduce a gas discharge portion sealed with a gas permeable film to allow gas to be discharged through a through hole formed in a pouch type battery case while effectively preventing the inflow and outflow of liquid.

Accordingly, when gas permeates through a gas permeable film via a through hole in a gas discharge portion and is discharged, an area of the gas permeable portion and a total thickness of the gas permeable film, and also a ratio of the thickness of the adhesive resin layer to the thickness of the permeable resin layer in the gas permeable film affect gas discharge performance and the inflow and outflow of liquid (moisture and electrolyte), and thus these design dimensions may be used as factors to define a water blocking index.

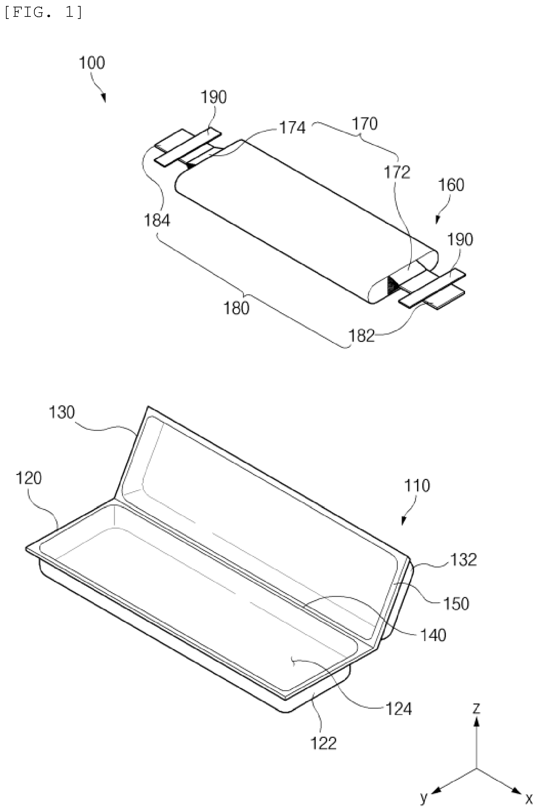

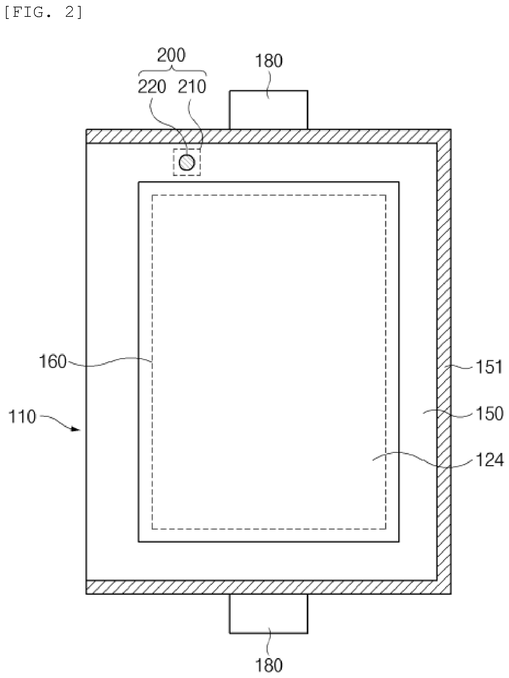

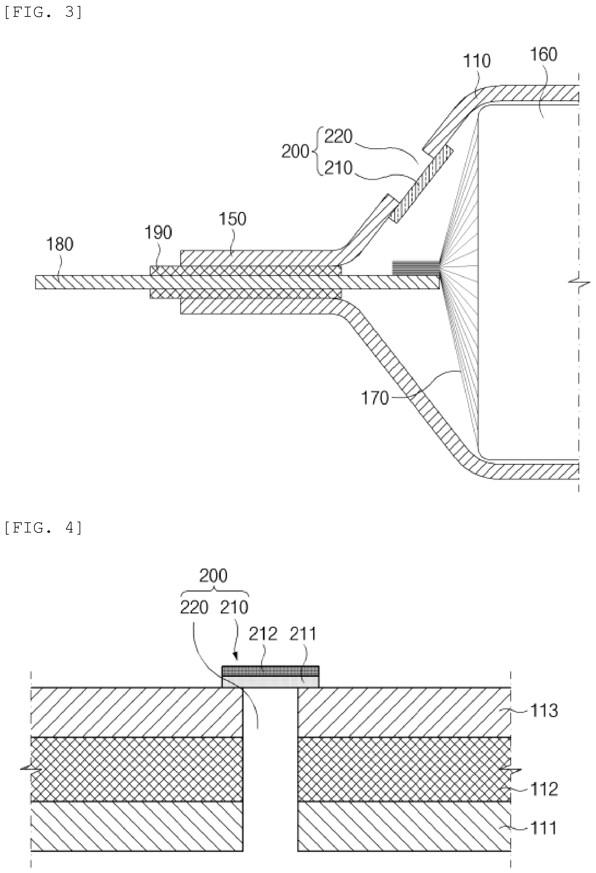

FIG. 1 is an exploded view of a pouch type secondary battery 100 according to the present invention, FIG. 2 is a plan view of a pouch type secondary battery 100, FIG. 3 is a cross-sectional view of a portion in which a gas discharge portion is provided in a pouch type battery case of a pouch type secondary battery, and FIG. 4 is an enlarged cross-sectional view of a portion in which a gas discharge portion is provided in a pouch type battery case of a pouch type secondary battery. In FIG. 2, some components of the pouch type secondary battery 100 are not provided for convenience of understanding. As shown in FIGS. 1 to 4, the pouch type secondary battery 100 of the present invention includes a pouch type battery case 110 including a gas discharge portion 200 according to the present invention, an electrode assembly 160, an electrode lead 180, and a lead film 190.

Hereinafter, referring to FIGS. 1 to 4, the pouch type battery case 110 and the pouch type secondary battery 100 of the present invention will be described.

In an aspect, the pouch type battery case 110 includes a cup portion provided with an accommodation space for accommodating an electrode assembly 110, a terrace portion formed along a perimeter of the accommodation portion, and at least one gas discharge portion, where each gas discharge portion is formed in at least one position among the cup portion and the terrace portion, and each gas discharge portion includes at least one through hole and a gas permeable film covering the through hole.

(1) Pouch film laminate

The pouch type battery case 110 may accommodate the electrode assembly 160 in an inner accommodation space. The pouch type battery case 110 may be manufactured by molding a pouch film laminate. In this case, as shown in FIG. 4, the pouch type battery case may include a base layer 111, a gas barrier layer 112, and a sealant layer 113. The base layer 111, the gas barrier layer 112, and the sealant layer 113 may be sequentially stacked.

The base layer 111 is formed on an outermost layer of the pouch film laminate to protect a secondary battery against external friction and collision. The base layer is made of a polymer and may thus electrically insulate an electrode assembly from the outside.

The base layer 111 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the base layer may be made of polyethylene terephthalate (PET), nylon, or a combination thereof, which has abrasion resistance and heat resistance.

The base layer 111 may have a single film structure made of any one material. Alternatively, the base layer 111 may have a composite film structure formed by two or more materials, each forming a layer.

The base layer 111 may have a thickness of 5 μm to 50 μm, specifically 7 μm to 40 μm, and more specifically 25 μm to 38 μm. When the thickness of the base layer satisfies the above range, external insulation properties are excellent, and an entire pouch is not thick, and accordingly, energy density to volume of a secondary battery may be excellent.

The gas barrier layer 112 is stacked between the base layer 111 and the sealant layer 113 to secure mechanical strength of a pouch, block the entry and exit of gases or moisture outside a secondary battery, and prevent electrolyte leakage from the inside of a pouch type battery case.

The gas barrier layer 112 may be formed of metal, and may specifically be formed of an aluminum alloy thin film. When the gas barrier layer 112 is formed using the aluminum alloy thin film, the gas barrier layer may have a predetermined level of mechanical strength and also be light in weight, and may complement electrochemical properties caused by an electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer 112 may have a thickness of 40 $\mu$m to 100 $\mu$m, specifically 50 $\mu$m to 90 $\mu$m, and more specifically 55 $\mu$m to 85 $\mu$m. When the thickness of the gas barrier layer 112 satisfies the above range, moldability and gas barrier performance are excellent when molding a cup portion.

The sealant layer 113 is thermally bonded together at a sealing portion when a pouch type battery case accommodating an electrode assembly inside is sealed to completely seal the inside of the pouch type battery case. To this end, the sealant layer 113 may be formed of a material having excellent thermal bonding strength.

The sealant layer 113 may be formed of a material having insulation, corrosion resistance, and sealing properties. Specifically, the sealant layer 113 is in direct contact with the electrode assembly and/or electrolyte inside the pouch type battery case, and may thus be formed of a material having insulation and corrosion resistance properties. In addition, the sealant layer 113 is supposed to completely seal the inside of the pouch type battery case and block material movement between inside and outside, and may thus be formed of a material having high sealing properties (e.g., excellent thermal bonding strength). To make sure that such insulation, corrosion resistance, and sealing properties are obtained, the sealant layer 113 may be formed of a polymer material.

The sealant layer 113 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber, and may preferably be formed of a polyolefin-based resin such as polypropylene (PP) and/or polyethylene (PE). In this case, the polypropylene may be composed of cast polypropylene (CPP), acid modified polypropylene (PPa), polypropylene-ethylene copolymer, and/or polypropylenebutylene-ethylene terpolymer.

The sealant layer 113 may have a thickness of 30 $\mu$m to 130 $\mu$m, specifically 50 $\mu$m to 120 $\mu$m, and more specifically 70 $\mu$m to 100 $\mu$m. When the thickness of the sealant layer 113 satisfies the above range, there is an effect of both securing the sealing strength of a sealing portion and securing the moldability of a pouch film laminate.

Meanwhile, the pouch film laminate may be drawn, molded, or stretched by a punch or the like to manufacture the pouch type battery case 110. Accordingly, the pouch type battery case 110 may include a cup portion 122 and an accommodation portion 124. The accommodation portion 124 is a place to accommodate the electrode assembly, and may indicate an accommodation space formed in the shape of a pocket inside the cup portion 122 as the cup portion 122 is formed.

According to an embodiment of the present invention, the pouch type battery case 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the embodiment of the present invention is not limited thereto, and the first case 120 and the second case 130 may be diversely manufactured, for example, individually manufactured by being separated from each other.

According to another embodiment of the present invention, when forming a cup portion in a pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 formed between the two cup portions 122 and 132 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than when there is only one cup portion 122 may be accommodated. In addition, one edge of the secondary battery 100 is formed by folding the pouch type battery case 110, and accordingly, the number of edges to be sealed may be reduced when a sealing process is performed later. Accordingly, the process speed of the pouch type secondary battery 100 may be improved and the number of sealing processes may be reduced.

As described in FIG. 2, the pouch type battery case 110 may be sealed while accommodating the electrode assembly 160 so that a portion of an electrode lead 180, which will be described later, i.e., a terminal portion, is exposed.

Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, as described above, an electrolyte is injected into the accommodation portion 124 and a portion of the terrace portion 150 formed along a perimeter of the first case 120 and the second case 130 may be sealed to form a sealing portion 151.

The sealing portion 151 may serve to seal the accommodation portion 124. Specifically, the sealing portion may seal the accommodation portion 124 by being formed on the terrace portion 150 formed along the perimeter of the accommodation portion 124.

The temperature at which the sealing portion 151 is sealed may be 180 °C to 250 °C, specifically 200 °C to 250 °C, and more specifically 211 °C to 240 °C. When the sealing temperature satisfies the numerical range described above , the pouch type battery case 110 may obtain sufficient sealing strength through thermal bonding.

(2) Gas discharge portion

According to embodiment 1, the gas discharge portion 200 of the pouch type battery case is formed in at least one position among the cup portion and the terrace portion, each gas discharge portion includes at least one through hole and a gas permeable film covering the through hole, the gas permeable film includes an adhesive resin layer and a permeable resin layer disposed on the adhesive resin layer, the gas permeable film is sealed to the battery case to form a sealing region around the through hole, and the gas discharge portion has a water blocking index (WBI) of 2.0 to 10.5, as indicated by Equation 1 below.

$$[\text{Equation 1}]$$

$$\text{WBI} = (A_S \times T_F \times T_T) \ / \ (A_H \times T_A \times 100)$$

In Equation 1 above, $A_S$ is an area (mm$^2$) of the sealing region, given as a unitless number, $T_F$ is a total thickness (μm) of the gas permeable film, given as a unitless number, $T_A$ is a thickness (μm) of the adhesive resin layer, given as a unitless number, $T_T$ is a thickness (μm) of the permeable resin layer, given as a unitless number, and $A_H$ is an area (mm$^2$) of the through hole, given as a unitless number.

The water blocking index is defined by using design dimensions of the through hole 220 and the gas permeable film 210 that constitute a gas discharge portion, as described above.

The gas discharge portion 200 exhibits a better gas discharge performance as the area of the through hole is wider, but increasing the area of the through hole 220 has a negative impact on moisture penetration and electrolyte leakage prevention performance. In terms of through hole durability, a bonding area between the gas permeable film 210 and the pouch type case 110, i.e., the sealing region, also needs to be considered, and thus an area in which the gas permeable film 210 is in contact with the pouch type battery case 110 also needs to be taken into account. In addition, a thinner gas permeable film 210 offers better gas discharge performance but reduced thickness may compromise adhesion, leading to issues with moisture penetration and electrolyte leakage prevention, and even when designed thin, the adhesion, gas discharge performance, and moisture penetration and electrolyte leakage prevention performance may be affected depending on the thickness design of each of the adhesive resin layer 211 and the permeable resin layer 212.

Considering these characteristics, by reflecting a ratio ($T_A/T_T$) of the thickness ($T_A$) of the adhesive resin layer 211 to the thickness ($T_T$) of the permeable resin layer 212 in the entire gas permeable film 210, a ratio of the area ($A_H$) of the through hole 220 to the area ($A_S$) of the sealing region where the gas permeable film 210 is in contact with the pouch type battery case 110, and a total thickness ($T_F$) of the gas permeable film 210, the present invention enables the design of a gas discharge portion minimizing electrolyte leakage from the inside to the outside of the pouch type battery case by setting an appropriate value of the water blocking index while maintaining gas discharge performance, and minimizing moisture penetration from the outside.

The water blocking index is 2.0 or less, and for example, may be 2.3 or greater, 2.5 or greater, or 3.0 or greater, and may also be 10.0 or less, 9.0 or less, 8.0 or less, 7.0 or less, or 6.0 or less.

When the water blocking index is less than 2.0, the bonding area (area of the sealing region) between the gas permeable film 210 and the pouch type battery case 110 may be smaller than the area of the through hole 220, and thus moisture penetration or electrolyte leakage may occur, and the durability itself may be compromised.

When the water blocking index is greater than 10.5, gas discharge performance may be compromised, resulting in issues such as insufficiently fast gas discharge speed to prevent swelling, a relatively thin adhesive resin layer leading to increased internal pressure causing seal failures at some points, and ultimately, venting due to exceeding the limit of adhesive strength.

In the pouch type battery case 110 according to embodiment 1, a gas discharge portion 200 may preferably be designed such that the water blocking index satisfies the range described above.

Hereinafter, the gas discharge portion 200 of the present invention will be described in more detail with reference to FIGS. 2 to 4. FIG. 2 is a plan view of a pouch type secondary battery showing an example of position where a gas discharge portion 200 is formed, FIG. 3 is a cross-sectional view of a pouch type secondary battery at a portion where a gas discharge portion 200 is formed, and FIG. 4 is an enlarged cross-sectional view of the gas discharge portion 200 of FIG. 3.

The gas discharge portion 200 may be formed at least one location selected from among a terrace portion 150 and cup portions 122 and 132 positioned adjacent to the terrace portion 150 and having no internal contact with an electrode assembly. In this case, the cup portions 122 and 132 and the accommodation portion 124 may not be substantially distinguished in structure, and the indented portion formed by molding in the pouch type battery case 110 may be named the cup portions 122 and 132, and an accommodation space formed by these indentations may be named the accommodation portion 124.

Referring to FIGS. 2 and 3, the gas discharge portion 200 may be formed in the terrace portion 150 instead of the sealing portion 151, and may be formed in the cup portion 122 or the accommodation portion 124 adjacent to the terrace portion 150. In particular, the electrode assembly 160 is accommodated and sealed inside the pouch type battery case 110 to form a sealing portion 151, and it may be preferable to form the gas discharge portion 200 in the a cup portion 122, which is a space where the electrode assembly 160 and the pouch type battery case 110 are not in direct contact, that is, a portion of the cup portion 122, which is a space where the electrode tab 170 is withdrawn from the electrode assembly 160 for electrical connection to the outside and comes into contact with the electrode lead 180.

The gas discharge portion 200 may be formed as a single unit, or may be provided as two or more units, and the number of gas discharge portions 200 may be designed in consideration of the characteristics of cells applied inside, such as whether a large or small amount of gas is generated, and as long as each gas discharge portion 200 is designed to satisfy the water blocking index described above, there is no particular limitation on the number thereof.

As shown in FIG. 3, in the gas discharge portion 200, the through hole 220 may be closed by adhering a gas permeable film 210 inside the pouch type battery case 110. In this case, a portion where the gas permeable film 210 and the pouch type battery case 110 come into contact may be sealed in a manner such as thermal fusion, or may be sealed using an adhesive. However, the sealing through thermal fusion is preferable in terms of durability, may be more preferable in preventing electrolyte leakage and blocking moisture penetration, and may contribute to accurately reflecting the performance that may be achieved through water blocking index.

Referring to FIG. 4, the gas discharge portion 200 shown in FIG. 3 may be seen enlarged, and an adhesive resin layer 211 of the gas permeable film 210 may be disposed to come into contact with a sealant layer 113 of the pouch type battery case 110. In this case, the sealing effect through thermal fusion may be maximized, which may help improve durability.

According to an embodiment of the present invention, as shown in FIG. 4, the gas discharge portion 200 includes an adhesive resin layer 211 in contact with the pouch type battery case 110 and a permeable resin layer 212 disposed on the adhesive resin layer 211.

The adhesive resin layer 211 is in contact with the pouch type battery case 110 and is intended to adhere the gas discharge portion 200 to the pouch type battery case 110, and may include any material that facilitates adhesion to the pouch type battery case 110. Specifically, the adhesive resin layer 211 may include a non-fluorinated polyolefin-based resin, and preferably, may include a modified polyolefin resin.

When the adhesive resin layer 211 includes a modified polyolefin resin, adhesive strength between the gas discharge portion 200 and the pouch type battery case 110 is improved, and thus, even when a pouch type secondary battery is stored in a high-temperature environment, the gas discharge portion 200 may be prevented from being detached from the pouch type battery case 110, thereby preventing the leakage of electrolyte inside the pouch and moisture penetration.

For example, the adhesive resin layer 211 may include at least one of acid modified polyolefin or silane-modified polyolefin.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto. In particular, applying maleic anhydride is preferable to improve the adhesive force between the gas discharge portion 200 and the electrode lead 180. The acid modified polyolefin may include at least one selected from the group consisting of acid modified polypropylene (PPa) and acid modified polyethylene (PEa), but is not limited thereto.

The silane-modified polyolefin indicates a polyolefin resin graft-modified with an unsaturated silane compound. The silane-modified polyolefin may have a structure in which an unsaturated silane compound is graft-copolymerized to a polyolefin resin, which is a main chain. The silane-modified polyolefin resin may include at least one selected from the group consisting of a silane-modified polypropylene resin and a silane-modified ethylene-vinyl acetate copolymer, but is not limited thereto.

The adhesive resin layer 211 may be modification-treated, and examples of the modification treatment include ion implantation treatment, plasma treatment, irradiation treatment, heat treatment, and the like, and treatment that changes the bonding structure of a polymer layer is preferred. These modification treatments may be performed individually, or may be performed in combination of two or more types. The modification-treated adhesive resin layer 211 may include plasma-treated polypropylene (PP), but is not limited thereto.

The adhesive resin layer 211 may have a thickness of 20 $\mu$m to 250 $\mu$m, specifically 30 $\mu$m to 200 $\mu$m, and more specifically 30 $\mu$m to 150 $\mu$m. When the thickness of the adhesive resin layer 211 satisfies the above numerical range, the adhesive resin layer 211 melts within the specified tact time and accordingly, the gas discharge portion 200 and the pouch type battery case 110 may be easily fused.

In an aspect, the permeable resin layer 212 may be a layer that comes into contact with the adhesive resin layer 211 to facilitate gas discharge.

The permeable resin layer 212 may include a fluorinated polyolefin-based resin, and preferably, may include at least one of polytetrafluoroethylene (PTFE) or polyimide (PI).

The permeable resin layer 212 may have a thickness of 30 $\mu$m to 200 $\mu$m, specifically 40 $\mu$m to 150 $\mu$m, and more specifically 45 $\mu$m to 100 $\mu$m. When the thickness of the permeable resin layer 212 satisfies the above numerical range, the gas discharge function may be smoothly performed without the gas discharge portion 200 being detached due to venting even when the internal pressure of the pouch type battery case 110 increases.

In an aspect, the gas permeable film 210 may have a thickness ($T_F$) of 80 $\mu$m to 500 $\mu$m, specifically, 80 $\mu$m to 450 $\mu$m, 80 $\mu$m to 400 $\mu$m, 90 $\mu$m to 350 $\mu$m, and more preferably 100 $\mu$m to 300 $\mu$m. When the above range is satisfied, the thickness ratio of the adhesive resin layer 211 and the permeable resin layer 212 constituting the gas permeable film 210 may be easily adjusted, and design considering adhesive strength and gas discharge performance may be facilitated.

A ratio ($T_A/T_T$) of the thickness ($T_A$) of the adhesive resin layer 211 to the thickness ($T_T$) of the permeable resin layer 212 may be 0.4 to 2.0, specifically 0.4 to 1.5, more specifically 0.4 to 1.2, and preferably 0.5 to 1.0. When the above ratio ($T_A/T_T$) satisfies the above numerical range, a gas discharge portion 200 that may discharge gas while maintaining adhesive strength without permanent damage to the gas discharge portion 200 due to venting and minimizing the pressure at which the gas discharge portion 200 starts operating may easily be achieved, and it may be desirable to satisfy the above range in designing a water blocking index.

In addition, the area ($A_H$) of the through hole may range from 5 mm$^2$ to 25 mm$^2$, preferably 6 mm$^2$ to 23 mm$^2$, and more preferably 7 mm$^2$ to 20 mm$^2$. When the above range is satisfied, water blocking index design may be facilitated with respect to a thickness of the gas permeable film 210, and it is possible to achieve a gas discharge portion 200 exhibiting excellent gas discharge performance while maintaining durability in a state where the operating pressure of the gas discharge portion 200 is lowered.

As an area in which the gas permeable film 210 and the pouch type battery case 110 are in contact, an area ($A_H$) of the sealing region may range from 10 mm$^2$ to 40 mm$^2$, preferably 11 mm$^2$ to 38 mm$^2$, and more preferably 12 mm$^2$ to 36 mm$^2$. When the above range is satisfied, the water blocking index may be easily achieved, but the above range is not absolute, and the ratio may be more meaningful in relation to the area of the through hole, and the above ratio may serve as a design dimension of the water blocking index.

The pouch type battery case according to embodiment 1 has a gas discharge portion as described above, and may thus significantly improve the performance of preventing electrolyte leakage and moisture penetration at a satisfactory level of gas discharge performance. Consequently, this may prevent corrosion due to generated gas or corrosion due to moisture penetration or electrolyte leakage, thereby contributing to improving lifespan due to increased durability, the driving performance of cells may be maintained through continuous gas discharge, and the risk of explosion caused by swelling is also reduced, thereby ensuring safety.

**Embodiment 2**

A pouch type battery case according to embodiment 2 includes a cup portion provided with an accommodation space for accommodating an electrode assembly, a terrace portion formed along a perimeter of the accommodation portion, and a gas discharge portion, where the gas discharge portion is provided in at least one position among the cup portion and the terrace portion, each gas discharge portion includes at least one through hole and a gas discharge portion including a gas permeable film covering the through hole, the gas permeable film includes an adhesive resin layer and a permeable resin layer disposed on the adhesive resin layer, and each gas discharge portion has a gas permeability index (GPI) of 0.05 to 0.55, as indicated by Equation 2 below.

[Equation 2]

$$GPI = (A_H \times T_A) / (TS_A \times T_F)$$

In Equation 2 above, $T_F$ is a total thickness ($\mu$m) of the gas permeable film, given as a unitless number, $T_A$ is a thickness ($\mu$m) of the adhesive resin layer, given as a unitless number, $TS_A$ is a tensile strength (kgf/mm$^2$) of the adhesive resin layer, given as a unitless number, and $A_H$ is an area (mm$^2$) of the through hole, given as a unitless number.

According to embodiment 2, a gas discharge portion sealed with a gas permeable film such that gas is discharged through the through hole formed in the pouch type battery case but the inflow and outflow of liquid are effectively blocked may be provided.

When gas permeates through a gas permeable film covering a through hole in a gas discharge portion and is discharged, an area of the gas permeable portion and a thickness of the gas permeable film, particularly, dimensions of the proportion of an adhesive resin layer in the gas permeable film affect gas discharge performance and the inflow and outflow of liquid (moisture and electrolyte), and tensile strength of the gas permeable film affects adhesive strength and gas permeability, and thus these design dimensions may be used as factors to define a gas permeability index.

The gas permeability index may be defined by using the design dimensions of the through hole 220 and the gas permeable film 210 constituting the gas discharge portion 200 as factors, as described above.

The gas discharge portion 200 exhibits a better gas discharge performance as the area of the through hole is wider, but increasing the area of the through hole 220 has a negative impact on moisture penetration and electrolyte leakage prevention performance. Conversely, reducing the area of the through hole 220 to prevent moisture penetration and electrolyte leakage may degrade gas discharge performance and induce increased tension on the gas permeable film 210 during gas discharge, which may compromise adhesion to the pouch type battery case 110. Therefore, the tensile strength of the adhesive resin layer 211 also needs to be considered to ensure that the gas permeable film 210 maintains adhesion while withstanding the tension generated by gas discharge. In addition, a thinner gas permeable film 210 offers better gas discharge performance but reduced thickness may compromise adhesion, leading to issues with moisture penetration and electrolyte leakage prevention, and even when designed thin, the adhesion and gas discharge performance may be affected depending on the thickness design of each of the adhesive resin layer 211 and the permeable resin layer 212.

Considering these characteristics, by reflecting a ratio ($T_A/T_F$) of the thickness ($T_A$) of the adhesive resin layer 211 to the thickness ($T_F$) of the entire gas permeable film 210 and a ratio of the area ($A_H$) of the through hole 220 to the tensile strength ($TS_A$) of the adhesive resin layer 211, the present invention enables the design of a gas discharge portion minimizing electrolyte leakage from the inside to the outside of the pouch type battery case by setting an appropriate value of the gas permeability index, and exhibiting excellent discharge performance during operation while minimizing moisture penetration from the outside.

The gas permeability index is 0.05 to 0.55, specifically, may be 0.08 or greater, 0.10 or greater, 0.15 or greater, or 0.17 or greater, and may also be 0.53 or less, 0.50 or less, or 0.48 or less.

When the gas permeability index is less than 0.05, the area of the through hole 220 is smaller than the tensile strength of the adhesive resin layer 211, leading to poor gas discharge performance, and consequently, swelling may not be prevented due to increased internal pressure, and the thickness ratio of the adhesive resin layer 212 is relatively too small, leading to a concern over durability, and thus venting may occur due to increased internal pressure.

When the gas permeability index is greater than 0.55, the tension applied to the gas permeable film 210 decreases as the area of the through hole 220 is greater than the tensile strength of the adhesive resin layer 211, and thus durability may be secured. However, the thickness of the permeable resin layer 212 becomes relatively thin, raising concerns about severe moisture penetration from the outside, which may be accompanied with electrolyte leakage.

In the pouch type battery case 110 according to embodiment 2, a gas discharge portion 200 may preferably be designed such that the gas permeability index satisfies the range described above.

The pouch type battery case according to embodiment 2 has a gas discharge portion as described above, and may thus significantly improve the performance of preventing electrolyte leakage and moisture penetration at a satisfactory level of gas discharge performance. Consequently, this may prevent corrosion due to generated gas or corrosion due to moisture penetration or electrolyte leakage, thereby contributing to improving lifespan due to increased durability, the driving performance of cells may be maintained through continuous gas discharge, and the risk of explosion caused by swelling is also reduced, thereby ensuring safety.

In addition, the technical configuration and description thereof regarding the cup portion, terrace portion, and gas discharge portion constituting the pouch type battery case, and the technical configuration and description thereof regarding the pouch film laminate, which is a material of the pouch type battery case, may be applied in the same manner as in embodiment 1, unless otherwise inconsistent with embodiment 2.

**Embodiment 3**

According to embodiment 3, the pouch type battery case 110 includes at least one through hole 220 formed in the cup portion or terrace portion and a gas permeable film 210 covering the through hole 220, where an anti-venting index (AVI) defined by Equation 3 below is 3.0 or less, and the gas permeable film 210 is sealed to the battery case 110 to form a sealing region 230 around the through hole 220.

$$[\text{Equation 3}]$$

$$AVI = [A_h \times r_h] / [W_s \times C_h]$$

In Equation 3 above, $A_h$ is a total cross sectional area (mm$^2$) of the through hole, given as a unitless number, $r_h$ is an average radius (mm) of the through hole, given as a unitless number, $W_s$ is an average width (mm) of the sealing region, given as a unitless number, and $C_h$ is a total circumference (mm) of the through hole, given as a unitless number.

The anti-venting index (AVI) is defined based on design dimensions of the through hole 220 and the gas permeable film 210 that constitute the gas discharge portion 200, as described above.

It is important that the gas discharge portion 200 operates at a low operating pressure and exhibits excellent gas discharge performance, but it is more important that the gas discharge portion 200 has durability that may withstand high internal pressure without venting. To increase the withstandable limit internal pressure without venting, the cross-sectional area ($A_h$) of the through hole 220 through which gas is permeated in the gas discharge portion 200 may be designed to be greater, aiming to reduce the tension exerted by internal gas, but in this case, an area where the through hole 220 may be installed in the pouch type battery case 110 is limited, and a maximum size thereof is also limited. Furthermore, moisture penetration from the outside or electrolyte leakage is hardly disregarded.

However, when forming a sealing region 230 having an appropriate width ($W_s$) by controlling the number of through holes 220 and the average radius ($r_h$) of the through holes 220 under an appropriate level of total cross-sectional area ($A_h$) of through holes 220, a gas discharge portion 200 exhibiting superior durability under high internal pressure in optimal conditions. That is, in a case where the total cross-sectional area ($A_h$) of the through hole 220 is the same, when the number of through holes 220 is increased to increase the total circumference ($C_h$), the tension exerted by internal gas is distributed even though the average radius ($r_h$) of the through holes 220 is reduced, resulting in increased limit internal pressure. In addition, when the average width ($W_s$) of the sealing region 230 is increased, the limit internal pressure may be further increased. However, even in the case where the total circumference ($C_h$) of the through holes 220 is increased, when the radius ($r_h$) of the through holes 220 increases and the total cross-sectional area ($A_h$) increases together, rather, the limit internal pressure is reduced even when the average width ($W_s$) of the sealing region is increased.

As the average width ($W_s$) of the sealing region 230 increases, the limit internal pressure is expected to increase, but this relationship is not simply independent, and it may be viewed that the influence on the durability to withstand the limit internal pressure varies depending on the average radius ($r_h$) of the through holes 220 and the total cross-sectional area ($A_h$) and total circumference ($C_h$) of the through holes 220.

Considering these characteristics and relationships, by defining a ratio ($A_h/C_h$) of the total cross-sectional area ($A_h$) to the total circumference ($C_h$) of the through holes 220 and a ratio ($W_s/r_h$) of the average width ($W_s$) of the sealing region to the average radius ($r_h$) of the through holes 220 as an anti-venting index, a gas discharge portion exhibiting an excellent ability to withstand the limit internal pressure as the anti-venting index is smaller is achievable.

In an aspect, the anti-venting index is 3.0 or less, and specifically, may be 0.10 or greater, 0.15 or greater, 0.20 or greater, 0.25 or greater, or 0.30 or greater, and may also be 2.80 or less, 2.60 or less, 2.50 or less, 2.40 or less, or 2.30 or less. When the anti-venting index is less than 0.10, the vent pressure may be high, but poor gas discharge may lead to swelling or venting into the sealing portion of the pouch type battery case 110. In addition, when the anti-venting index is greater than 3.0, the vent pressure is low and fails to satisfy the limit internal pressure that may secure the safety of batteries, and from this point on, the amount of moisture penetration and electrolyte leakage becomes a concern. Therefore, in the pouch type battery case 110 according to an embodiment of the present invention, it is preferable to design the gas discharge portion 210 to satisfy the range of anti-venting index described above.

A total cross-sectional area ($A_h$) and a total circumference ($C_h$) of the through hole 220 may indicate a total sum of the cross-sectional areas and circumferences of the formed through holes 220, an average radius ($r_h$) of the through hole 220 may indicate an average value of the radii of the formed through holes 220, and an average width ($W_h$) of the sealing region 230 may indicate an average value of widths of the sealing regions 230 formed around each of the through holes 220. In general, the width of the sealing region 230 formed around one through hole 220 is uniform, but when the width is not uniform, the average value may be utilized as described above.

In an aspect, the relationship between some factors defining the anti-venting index of the gas discharge portion 200 may also be defined, and for example, a ratio ($W_s/r_h$) of the average width ($W_s$) of the sealing region 230 to the average radius ($r_h$) of the through hole 220 may range from 0.45 to 3.00. Specifically, the ratio ($W_s/r_h$) may be 0.50 or greater, 0.55 or greater, 0.60 or greater, or 0.65 or greater, and may be 2.80 or less, 2.70 or less, 2.60 or less, 2.50 or less, or 2.40 or less. When the total cross-sectional area of the through hole 220 is the same and the ratio described above is satisfied, the limit internal pressure may be increased.

As another example, the ratio ($A_h/C_h$) of the total cross-sectional area ($A_h$) to the total circumference ($C_h$) of the through hole 220 may range from 0.25 mm to 2.50 mm. Preferably, the ratio ($A_h/C_h$) may be 0.30 mm or greater, 0.40 mm or greater, 0.50 mm or greater, 0.60 mm or greater, 0.70 mm or greater, or 0.75 mm or greater, and may also be 2.40 mm or less, 2.20 mm or less, 2.00 mm or less, 1.80 mm or less, 1.50 mm or less, or 1.25 mm or less, and in this case, it may indicate that the through hole 220 is installed with optimal efficiency within a limited space where the through hole 220 may be installed, as a basic condition that may increase the limit internal pressure is satisfied.

The area ($A_H$) of the through hole may range from 5 mm$^2$ to 25 mm$^2$, preferably 6 mm$^2$ to 23 mm$^2$, and more preferably 7 mm$^2$ to 20 mm$^2$. When the above range is satisfied, gas permeability index design may be facilitated with respect to a thickness of the gas permeable film 210, and it is possible to achieve a gas discharge portion 200 exhibiting excellent gas discharge performance while maintaining durability in a state where the operating pressure of the gas discharge portion 200 is lowered.

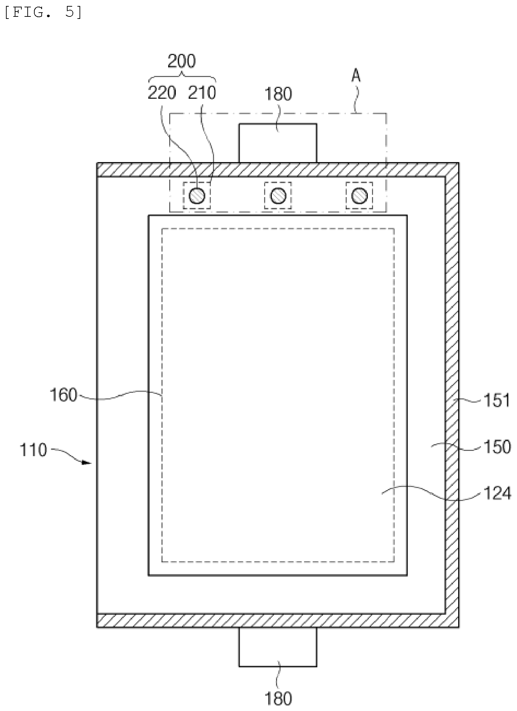

FIG. 5 is a plan view of a pouch type secondary battery according to embodiment 3 of the present invention, showing a case in which three gas discharge portions 200 are installed. Referring to FIG. 5, a gas discharge portion 200 may be installed on a terrace portion 150 where an electrode lead protrudes, and an appropriate number of units may be installed within a range of 1 to 6 as described above. In addition, in FIG. 5, the gas discharge portion 200 is installed only on an upper portion of the terrace section 150 based on the drawing, but the gas discharge portion 200 may also be installed on a lower portion of the terrace section 150 and on both the upper and lower portions.

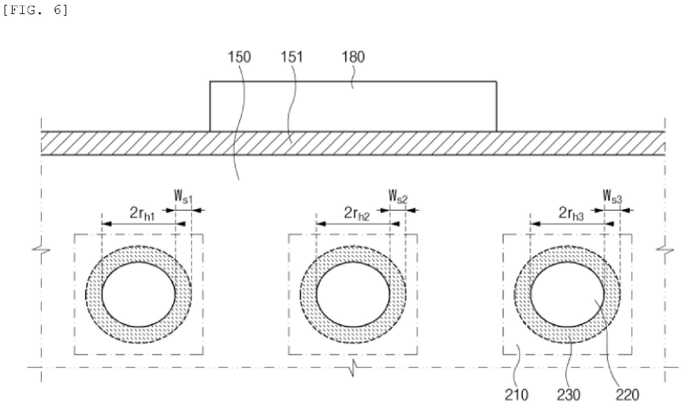

FIGS. 6 to 8 are enlarged plan views of region A of FIG. 5, showing an enlarged region where the gas discharge portion 200 is installed. Referring to FIG. 6, in the case where three gas discharge portions 200 are installed, factors included in the anti-venting index may be obtained as described above. For example, an average radius ($r_h$) of the through hole 220 in this drawing may be obtained through ($r_{h1}+r_{h2}+r_{h3}$)/3, a total cross-sectional area ($A_h$) of the through hole 220 may be obtained through $\pi r_{h1}^2 + \pi r_{h2}^2 + \pi r_{h3}^2$, a total circumference ($C_h$) of the through hole 220 may be obtained through $2\pi r_{h1} + 2\pi r_{h2} + 2\pi r_{h3}$, and an average width of the sealing region 230 may be obtained through ($W_{s1}+W_{s2}+W_{s3}$)/3, where $W_{s1}$, $W_{s2}$, and $W_{s3}$ may each be an average value of the width of the sealing region sealed around each through hole 220.

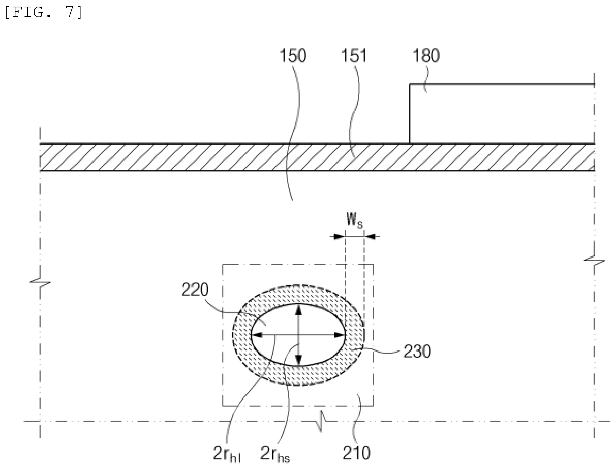

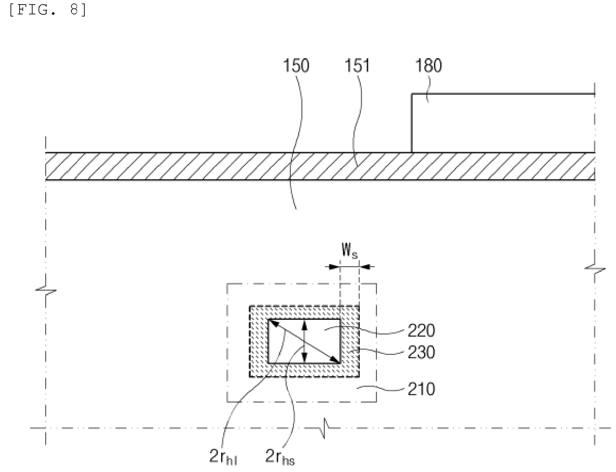

In addition, as in FIG. 7, when the shape of the through hole 220 is an ellipse rather than a circle, an average radius ($r_h$) may be obtained as an average of a major axis and a minor axis, and thus may be obtained through ($r_{hl}+r_{hs}$)/2. In addition, as in FIG. 8, when the through hole 220 is a polygon, an average value of a longest straight line and a shortest straight line connecting points and surfaces may be used as an average radius ($r_h$) of the through hole 220. Therefore, in the case of FIG. 8, the average radius ($r_h$) may be obtained through ($r_{hl}+r_{hs}$)/2.

The pouch type battery case according to embodiment 3 has a gas discharge portion as described above, and may thus be operated at a low operating pressure and shows a satisfactory level of gas discharge performance, thereby withstanding high internal pressure, resulting in significantly improved durability. This may contribute to improving lifespan, maintaining the operating performance of cells through continuous gas discharge, and securing safety by stably discharging gas while suppressing venting.

In addition, the technical configuration and description thereof regarding the cup portion, terrace portion, and gas discharge portion constituting the pouch type battery case, and the technical configuration and description thereof regarding the pouch film laminate, which is a material of the pouch type battery case, may be applied in the same manner as in embodiment 1, unless otherwise inconsistent with embodiment 2.

**Pouch type secondary battery**

According to another embodiment of the present invention, a pouch type secondary battery 100 is provided, which includes an electrode assembly 160, a pouch type battery case 110 as described above, an electrode lead 180 connected to the electrode assembly 160 and protruding to the outside of the pouch type case 110 via the terrace portion 150, and a lead film 190 disposed between the electrode lead 180 and the pouch type case 110 on the terrace portion 150, where a portion of the terrace portion 150 is sealed along a perimeter of the cup portions 122 and 132 to form a sealing portion 151.

Descriptions of the pouch type battery case 110 and the gas discharge portion 200 provided in the pouch type battery case 110 overlap ones described above, and thus the descriptions thereof will be skipped. Hereinafter, other components included in the pouch type secondary battery 100 will be described.

(1) Electrode assembly

In an aspect, the electrode assembly 160 may be accommodated in the accommodation portion 124 of the pouch type battery case 110 and sealed by a sealing portion 151 formed through thermal fusion of the terrace portion 150 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

Referring to FIG. 1, the electrode tab 170 is connected to each of the positive electrode and the negative electrode of the electrode assembly 160, and protrudes outward from the electrode assembly 160, and may thus serve as a path through which electrons move between the inside and the outside of the electrode tab. A current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (2) Electrode lead

In an aspect, the electrode lead 180 may supply electricity to the outside of the secondary battery 100. The electrode lead 180 may be connected to the electrode tab 170 of the electrode assembly 160 through spot welding, or the like.

Referring to FIGS. 1 and 3, the electrode lead 180 may be connected to the electrode assembly 160 and may protrude to the outside of the pouch type battery case 110 via the terrace portion 150. Specifically, one end of the electrode lead 180 may be connected to the electrode assembly 160, particularly to the electrode tab 170, and the other end of the electrode lead 180 may protrude to the outside of the pouch type battery case 110 via the terrace portion 150.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

One side of the electrode lead 180, which is in direct contact with the lead film 190 and/or the gas discharge portion 200, may be coated with at least one selected from the group consisting of chromium (Cr), nickel (Ni), aluminum oxide ($Al_2O_3$), zirconium (Zr)-based anhydride salt, and titanium (Ti)-based anhydroxide salt. In this case, corrosion resistance against an electrolyte solution and adhesion to the lead film 190 and/or the gas discharge portion 200 may be obtained.

### (3) Lead film

In an aspect, the lead film 190 may prevent electricity generated from the electrode assembly 160 from flowing to the battery case 110 through the electrode lead 180, and allow the sealing of the battery case 110 to be maintained. To this end, the lead film 190 may be formed of a non-conductor having non-conductive properties in which electricity does not flow well. In general, as the lead film 190, relatively thin insulation tape easily attached to the electrode lead 180 and/or the gas discharge portion 200 is widely used, but the embodiment of the present invention is not limited thereto, and thus any member capable of insulating the electrode lead 180 may be used.

The lead film 190 may be disposed to surround an outer circumferential surface of the electrode lead 180. The lead film 190 may be placed to be limited within the terrace portion 150 where the sealing portion 151 in which the first case 120 and the second case 130 of the pouch type battery case 110 are thermally fused is located, and may make the electrode lead 180 adhere to the battery case 110.

The lead film 190 may be disposed between the electrode lead 180 and the pouch type battery case 110. For example, as shown in FIG. 3, a lower case 110, a lead film 190, an electrode lead 180, a lead film 190, and an upper case 110 may be stacked and disposed in this order in the terrace portion 150.

The lead film 190 may include at least one layer. Specifically, the lead film 190 may include a metal adhesive layer, a core layer, and a pouch adhesive layer, which are sequentially stacked.

The metal adhesive layer is in direct contact with the electrode lead 180 and may be used to make the lead film 190 adhere to the electrode lead 180. The metal adhesive layer may include any material that easily adheres to the electrode lead 180. Specifically, the metal adhesive layer may include acid modified polyolefin. For example, the metal adhesive layer may include at least one of acid modified polypropylene (PPa), acid modified polyethylene (PEa), or plasma-treated polypropylene (PP), but is not limited thereto. The metal adhesive layer may have a thickness of 50 $\mu$m to 80 $\mu$m, specifically 50 $\mu$m to 75 $\mu$m, more specifically 60 $\mu$m to 75 $\mu$m. When the thickness of the metal adhesive layer satisfies the above numerical range, there is an effect of preventing penetrated pinholes and leaks at an edge portion during fusion between the electrode lead and the lead film.

The core layer may be a layer placed at the center of the lead film 190. The core layer may include additives such as polypropylene, polyolefin elastomer (POE), and/or colorant, but is not limited thereto. In particular, the polymer included in the core layer may be a homopolymer. When the homopolymer is included in the core layer, the melting point of the core layer may be controlled within the above numerical range and deformation caused by heat may be minimized, which serves better for securing insulation. The core layer may have a thickness of 40 $\mu$m to 70 $\mu$m, specifically 50 $\mu$m to 70 $\mu$m, and more specifically 60 $\mu$m to 70 $\mu$m. When the thickness of the core layer satisfies the above numerical range, deformation caused by heat applied upon fusion and sealing may be prevented to bring about a robust design effect in terms of securing insulation.

The pouch adhesive layer may be a layer in direct contact with the battery case 110, specifically the sealant layer of the pouch film laminate. The pouch adhesive layer may include polypropylene or polyolefin elastomer (POE), but is not limited thereto. In particular, the polymer included in the pouch adhesive layer may be a copolymer. The melting point of the pouch adhesive layer including a copolymer may be controlled within the above numerical range, and the pouch adhesive layer has a melting point similar to that of the polymer in the sealant layer of the pouch film laminate, which serves better for securing sealing processability. The pouch adhesive layer may have a thickness of 40 $\mu$m to 100 $\mu$m, specifically 40 $\mu$m to 80 $\mu$m, more specifically 40 $\mu$m to 60 $\mu$m. When the thickness of the pouch adhesive layer satisfies the above numerical range, there is an effect of securing a polymer (e.g., polypropylene) residual rate sufficient to obtain strength for sealing between the electrode lead and the pouch film laminate.

(4) Electrolyte

The pouch type secondary battery 100 may further include an electrolyte (not shown) injected into the pouch type battery case 110. The electrolyte is used to move lithium ions generated through electrochemical reactions of an electrode upon charging/discharging of the secondary battery 100, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

**Examples and Comparative Examples**

**Pouch type secondary battery with pouch type battery case according to embodiment 1**

**Examples 1a to 9a, Comparative Examples 1a to 3a**

(1) Preparation of pouch type battery case

A polyethylene terephthalate (PET) film having a width of 266 mm, a length of 50 m, and a thickness of 12 μm and a nylon film having a width of 266 mm, a length of 50 m, and a thickness of 25 μm were stacked on one side of an aluminum alloy thin film having a width of 266 mm, a length of 50 m, and a thickness of 60 μm, and a polypropylene film having a width of 266 mm, a length of 50 m, and a thickness of 80 μm was stacked on the other side to prepare a pouch film laminate having a structure of polyethylene terephthalate/nylon/aluminum alloy thin film/polypropylene film. In this case, the polyethylene terephthalate film and the nylon film are base layers, the aluminum alloy thin film is a gas barrier layer, and the polypropylene film is a sealant layer.

The pouch film laminate was molded to manufacture a pouch type battery case including an accommodation portion and a terrace portion, and a through hole was formed on the accommodation portion (cup portion) adjacent to the terrace portion as in FIG. 2, and a gas permeable film was thermally fused inside the pouch type battery case to form a gas discharge portion.

In this case, the gas discharge portion was designed as shown in Table 1 below. In Table 1 below, PP indicates polypropylene, PE indicates polyethylene, and PPa indicates acid-modified polypropylene.

(2) Manufacturing of pouch type secondary battery

A negative electrode, a positive electrode, and a porous polyethylene separator were assembled using a stacking method, and then laminated to manufacture an electrode assembly. Thereafter, an electrode lead was coupled to the electrode assembly.

LiPF$_6$ was dissolved in a solvent (EC:EMC:DMC = volume ratio of 3:3:4 ) to 1.0 M to prepare an electrolyte. The electrode assembly was accommodated in the pouch type battery case with a front end of the electrode lead protruding to the outside, and the electrolyte was injected.

Then, a 200 μm thick lead film was stacked on each of a lower surface of the electrode lead and an upper surface of the gas discharge portion. The lead film may include a 75 μm thick metal adhesive layer containing copolymer polypropylene and acid modified polypropylene, a 65 μm thick core layer containing homopolymer polypropylene, and a 60 μm thick pouch adhesive layer containing copolymer polypropylene.

Thereafter, the sealing portion of the pouch type battery case was sealed for 2 seconds in the conditions of a seal bar area of 200 mm × 10 mm, 212 °C, and 0.27 MPa, and then left at 60 °C for 4 hours to manufacture a pouch type secondary battery.

[Table 1]

| | Thickness of adhesive layer, $T_A$ (μm) | Type of adhesive layer | Thickness of permeable layer, $T_T$ (μm) | Type of permeable layer | Area of through hole, $A_H$ (mm$^2$) | Area of sealing region, $A_S$ (mm$^2$) | WBI |
|---|---|---|---|---|---|---|---|
| Example 1a | 100 | PE | 100 | PTFE | 7.07 | 35.3 | 9.99 |
| Example 2a | 100 | PE | 100 | PTFE | 7.07 | 18.8 | 5.32 |
| Example 3a | 100 | PP | 60 | PTFE | 7.07 | 35.3 | 4.79 |
| Example 4a | 100 | PP | 100 | PTFE | 7.07 | 12.6 | 3.57 |
| Example 5a | 100 | PPa | 100 | PTFE | 19.63 | 35.3 | 3.60 |
| Example 6a | 100 | PPa | 200 | PTFE | 19.63 | 18.8 | 5.74 |
| Example 7a | 100 | PPa | 60 | PTFE | 7.07 | 18.8 | 2.55 |
| Example 8a | 80 | PPa | 100 | PTFE | 12.57 | 18.8 | 3.37 |
| Example 9a | 80 | PPa | 100 | PTFE | 12.57 | 35.3 | 6.32 |
| Comparative Example 1a | 50 | PPa | 60 | PTFE | 19.63 | 18.8 | 1.26 |
| Comparative Example 2a | 20 | PPa | 60 | PTFE | 7.07 | 35.3 | 11.90 |
| Comparative Example 3a | 100 | PPa | 200 | PTFE | 7.07 | 18.8 | 15.95 |
| * Adhesive layer: adhesive resin layer, Permeable layer: permeable resin layer | | | | | | | |

**Experimental Example 1a: Evaluation of gas discharge portion**

The properties of the gas permeable film were measured and the performance was evaluated through the following method for the following items.

1) Gas discharge rate (cc/day): $CO_2$ was injected into the pouch type secondary batteries using pressure equipment from ITS Corporation to increase the pressure inside the pouch to 1.5 atm, and an amount of gas discharged for 24 hours was measured, and the results are shown in Table 4 below.

2) HF concentration (ppm): The pouch type secondary battery was left under conditions of 60 °C and 90% relative humidity for 16 weeks, the secondary battery was then opened and HF concentration (in ppm by weight) in an electrolyte was measured to evaluate the degree of moisture penetration, and the results are shown in Table 2 below.

[Table 2]

|  | WBI | Discharge rate (cc/day) | HF concentration (ppm) |
|---|---|---|---|
| Example 1a | 9.99 | 4.4 | 426.2 |
| Example 2a | 5.32 | 5.6 | 496.3 |
| Example 3a | 4.79 | 8.5 | 399.4 |
| Example 4a | 3.57 | 6.4 | 293.7 |
| Example 5a | 3.60 | 7.2 | 617.8 |
| Example 6a | 5.74 | 4.8 | 308.9 |
| Example 7a | 2.55 | 9.6 | 821.6 |
| Example 8a | 3.37 | 7.9 | 679.6 |
| Example 9a | 6.32 | 8.4 | 702.9 |
| Comparative Example 1a | 1.26 | 13.4 | 986.0 |
| Comparative Example 2a | 11.99 | 16.1 | 1423.1 |
| Comparative Example 3a | 15.96 | 3.1 | 222.4 |

According to Table 2 above, it is seen that the water blocking index (WBI) may be defined according to the thickness ratio of the adhesive resin layer and the permeable resin layer and the ratio of the area of the through hole and the area of the sealing region, and the effect of water blocking is also reflected accordingly. In the case of Examples 1a to 9a, it is seen that as the WBI satisfies the range of 2.0 to 10.5, the water blocking performance is excellent along with a satisfactory level of gas discharge performance.

However, in the case of Comparative Example 1a where the WBI is less than 2.0, it is seen that the permeable resin layer is thinner than the adhesive resin layer while the gas permeable film is thin in entire thickness, and the appropriate design of the ratio of the area of the sealing region and the area of the through hole fails, resulting in poor gas discharge performance moisture penetration prevention performance. In addition, Comparative Examples 2a and 3a have a WBI value of greater than 10.5. To overcome the limitation of Comparative Example 1a, Comparative Example 2a was designed to have a reduced hole area and increased sealing, but it was found that this was also excessive to the extent that the WBI value was not controlled, thereby failing to resolve the issue of moisture penetration despite the narrow hole. In addition, Comparative Example 3a shows that when the WBI value is not satisfied, the trade-off relationship between degradation in discharge rate due to increased film thickness and moisture penetration prevention performance is not resolved.

**Pouch type secondary battery with pouch type battery case according to embodiment 2**

**Examples 1b to 8b, Comparative Examples 1b to 4b**

(1) Preparation of pouch type battery case

A pouch film laminate manufactured in the same manner as in Example 1a was molded to manufacture a pouch type battery case including an accommodation portion and a terrace portion, and a through hole was formed on the accommodation portion (cup portion) adjacent to the terrace portion as in FIG. 2, and a gas permeable film was thermally fused inside the pouch type battery case to form a gas discharge portion.

In this case, the gas discharge portion was designed as shown in Table 3 below. In Table 3 below, PP indicates polypropylene, PE indicates polyethylene, and PPa indicates acid-modified polypropylene.

(2) Manufacturing of pouch type secondary battery

A pouch type secondary battery was manufactured in the same manner as in Example 1a, except that the pouch type battery case manufactured in (1) of Example 1b was used.

[Table 3]

| | Thickness of adhesive layer, $T_A$ ($\mu$m) | Tensile strength of adhesive layer, $TS_A$ (kgf/m m$^2$) | Type of adhesive layer | Thickness of permeable layer, $T_T$ ($\mu$m) | Type of permeable layer | Through hole Area, $A_H$ (mm$^2$) | GPI |
|---|---|---|---|---|---|---|---|
| Example 1b | 100 | 20.3 | PPa | 100 | PTFE | 7.07 | 0.17 |
| Example 2b | 100 | 20.3 | PPa | 100 | PTFE | 12.57 | 0.31 |
| Example 3b | 100 | 20.3 | PPa | 100 | PTFE | 19.63 | 0.48 |
| Example 4b | 60 | 20.3 | PP | 100 | PTFE | 7.07 | 0.13 |
| Example 5b | 60 | 20.3 | PP | 100 | PTFE | 12.57 | 0.23 |
| Example 6b | 60 | 20.3 | PP | 100 | PTFE | 19.63 | 0.36 |
| Example 7b | 100 | 20.3 | PPa | 80 | PTFE | 19.63 | 0.54 |
| Example 8b | 100 | 11.9 | PE | 100 | PTFE | 12.57 | 0.52 |
| Comparative Example 1b | 60 | 11.9 | PPa | 40 | PTFE | 19.63 | 0.99 |
| Comparative Example 2b | 60 | 12.1 | PPa | 60 | PTFE | 19.63 | 0.82 |
| Comparative Example 3b | 40 | 5.6 | PE | 100 | PTFE | 12.57 | 0.64 |
| Comparative Example 4b | 150 | 46.3 | PP | 100 | PTFE | 3.14 | 0.04 |
| * Adhesive layer: adhesive resin layer, Permeable layer: permeable resin layer | | | | | | | |

**Experimental Example 1b: Evaluation of gas discharge portion**

The properties of the gas permeable film were measured and the performance was evaluated through the following method for the following items.

1) Gas discharge rate (cc/day): $CO_2$ was injected into the pouch type secondary batteries using pressure equipment from ITS Corporation to increase the pressure inside the pouch to 1.5 atm, and an amount of gas discharged for 24 hours was measured, and the results are shown in Table 4 below.

2) HF concentration (ppm): The pouch type secondary battery was left under conditions of 60 °C and 90% relative humidity for 16 weeks, the secondary battery was then opened and HF concentration (in ppm by weight) in an electrolyte was measured to evaluate the degree of moisture penetration, and the results are shown in Table 4 below.

[Table 4]

| | GPI | HF concentration (ppm) | Discharge rate (cc/day) |
|---|---|---|---|
| Example 1b | 0.17 | 710.6 | 4.5 |
| Example 2b | 0.31 | 544.8 | 4.9 |

(continued)

|  | GPI | HF concentration (ppm) | Discharge rate (cc/day) |
| --- | --- | --- | --- |
| Example 3b | 0.48 | 617.8 | 7.0 |
| Example 4b | 0.13 | 445.0 | 5.1 |
| Example 5b | 0.23 | 494.45 | 6.6 |
| Example 6b | 0.36 | 549.4 | 8.0 |
| Example 7b | 0.54 | 713.1 | 7.7 |
| Example 8b | 0.53 | 548.0 | 5.3 |
| Comparative Example 1b | 0.98 | 1110.4 | 12.0 |
| Comparative Example 2b | 0.60 | 953.1 | 10.9 |
| Comparative Example 3b | 0.64 | 963.2 | 8.6 |
| Comparative Example 4b | 0.04 | 414.3 | 3.4 |

Referring to Table 4 above, in the case of Examples 1b to 8b where the gas permeability index was 0.05 to 0.55, it is determined that the discharge rate was maintained at an appropriate speed to prevent swelling of the pouch type secondary battery and prevent venting, while also exhibiting excellent moisture penetration prevention ability, thereby achieving an HF concentration of 800 ppm or less.

However, in the case of Comparative Examples 1b to 3b where the gas permeability index exceeded 0.55, it is determined that a large amount of moisture penetration was induced and thus the HF concentration was above 900 ppm. Even when the gas discharge rate was secured, it was observed that moisture was also entering and exiting, indicating poor long-term stability and thus hindering commercialization. Furthermore, in Comparative Example 4b where the gas permeability index was less than 0.05, it is expected that even when a certain level of performance was secured for moisture penetration, the gas discharge rate was too poor, making it difficult to prevent swelling or venting of batteries.

Accordingly, when designing a gas discharge portion of a pouch type secondary battery according to an embodiment of the present invention, it is determined that a gas discharge portion exhibiting excellent gas discharge performance while securing a certain level of performance against moisture penetration is achievable by controlling factors such that the gas permeability index satisfies a range of 0.5 to 0.55.

**Pouch type secondary battery with pouch type battery case according to embodiment 3**

**Examples 1c to 9c and Comparative Examples 1c to 7c**

(1) Preparation of pouch type battery case

A pouch film laminate manufactured in the same manner as in Example 1a was molded to manufacture a pouch type battery case including an accommodation portion and a terrace portion, and a through hole was formed on the accommodation portion (cup portion) adjacent to the terrace portion as in FIG. 2, and a gas permeable film was thermally fused inside the pouch type battery case to form a gas discharge portion.

In this case, the gas discharge portion was designed as shown in Table 5 below, and as the gas permeable film, 100 $\mu$m thick polytetrafluoroethylene (PTFE) was applied as a permeable resin layer, and 100 $\mu$m thick acid-modified polypropylene (PPa) was applied as an adhesive resin layer.

(2) Manufacturing of pouch type secondary battery

A pouch type secondary battery was manufactured in the same manner as in Example 1a, except that the pouch type battery case manufactured in (1) of Example 1c was used.

[Table 5]

| | No. of holes | Average radius of holes (mm) | Total cross-sectional area of holes (mm$^2$) | Total circumference of holes (mm) | Average width of sealing region (mm) | (Total cross-sectional area) / (Total circumference) | (Average width of sealing region) / (Average radius of through hole) | AVI |
|---|---|---|---|---|---|---|---|---|
| Example 1c | 1 | 2.5 | 6.25 | 5 | 2.5 | 1.25 | 1.00 | 1.25 |
| Example 2c | 1 | 3.0 | 9 | 6 | 2.0 | 1.50 | 0.67 | 2.25 |
| Example 3c | 2 | 2.5 | 12.5 | 10 | 2.5 | 1.25 | 1.00 | 1.25 |
| Example 4c | 3 | 3.0 | 27 | 18 | 2.0 | 1.50 | 0.67 | 2.25 |
| Example 5c | 4 | 1.5 | 9 | 12 | 3.5 | 0.75 | 2.33 | 0.32 |
| Example 6c | 4 | 1.5 | 9 | 12 | 1.0 | 0.75 | 0.67 | 1.13 |
| Example 7c | 4 | 2.5 | 25 | 20 | 2.5 | 1.25 | 1.00 | 1.25 |
| Example 8c | 5 | 2.0 | 20 | 20 | 3.0 | 1.00 | 1.50 | 0.67 |
| Example 9c | 5 | 2.0 | 20 | 20 | 1.0 | 1.00 | 0.50 | 2.00 |
| Comparative Example 1c | 1 | 2.5 | 6.25 | 5 | 1.0 | 1.25 | 0.40 | 3.13 |
| Comparative Example 2c | 1 | 3.0 | 9 | 6 | 1.0 | 1.50 | 0.33 | 4.50 |
| Comparative Example 3c | 2 | 2.5 | 12.5 | 10 | 1.0 | 1.25 | 0.40 | 3.13 |
| Comparative Example 4c | 2 | 4.0 | 32 | 16 | 1.0 | 2.00 | 0.25 | 8.00 |
| Comparative Example 5c | 3 | 3.0 | 27 | 18 | 1.0 | 1.50 | 0.33 | 4.50 |
| Comparative Example 6c | 4 | 2.5 | 25 | 20 | 1.0 | 1.25 | 0.40 | 3.13 |
| Comparative Example 7c | 4 | 4.0 | 64 | 32 | 1.0 | 2.00 | 0.25 | 8.00 |

\* $\pi$ is omitted.

### Experimental Example 1c: Evaluation of gas discharge portion

To evaluate the performance of the gas discharge portion, vent pressure was measured. Air was injected into the pouch type secondary battery using pressure equipment from ITS Corporation to increase the pressure inside the pouch to 2.0 bar, and then increase the pressure by 0.5 bar at a time, and the pressure at a point when the gas discharge portion was damaged and the internal gas was completely vented was measured to determine the vent pressure (bar). The results are shown in Table 6 below.

[Table 6]

| | AVI | Vent pressure (bar) |
|---|---|---|
| Example 1c | 1.25 | 6.50 |
| Example 2c | 2.25 | 5.00 |
| Example 3c | 1.25 | 5.50 |
| Example 4c | 2.25 | 5.00 |

(continued)

|  | AVI | Vent pressure (bar) |
| --- | --- | --- |
| Example 5c | 0.32 | 7.25 |
| Example 6c | 1.13 | 6.50 |
| Example 7c | 1.25 | 6.25 |
| Example 8c | 0.67 | 7.00 |
| Example 9c | 2.00 | 5.25 |
| Comparative Example 1c | 3.13 | 4.75 |
| Comparative Example 2c | 4.50 | 4.50 |
| Comparative Example 3c | 3.13 | 4.50 |
| Comparative Example 4c | 8.00 | 2.50 |
| Comparative Example 5c | 4.50 | 3.00 |
| Comparative Example 6c | 3.13 | 4.00 |
| Comparative Example 7c | 8.00 | 2.00 |

Referring to Table 6 above, in the case of Examples 1c to 9c, the AVI value was satisfied by controlling the number and size of holes and the width of sealing through precise design of the gas discharge portion, and accordingly, the vent pressure was found to be high as 5.0 bar or greater. However, in the case of Comparative Examples 1c to 7c, although the design dimensions were similar to those of Examples, the AVI value was not satisfied due to failure to precise control, and accordingly, the vent pressure was found to be significantly low.

Accordingly, it is determined that when the gas discharge portion is designed and applied according to the AVI, as in Examples with high vent pressure, the gas discharge portion has excellent durability, and thus even when a large amount of gas is generated from batteries, the gas is discharged efficiently, leading to high vent pressure, thereby providing a lithium secondary battery exhibiting excellent durability and lifespan.

[Description of Symbols]

100: Pouch type secondary battery
110: Pouch type battery case
111: Base layer
112: Gas barrier layer
113: Sealant layer
120: First case
122: Cup portion
124: Accommodation portion
130: Second case
132: Cup portion
140: Bridge portion
150: Terrace portion
151: Sealing portion
160: Electrode assembly
170: Electrode tab
172: Positive electrode tab
174: Negative electrode tab
180: Electrode lead
182: Positive electrode lead
184: Negative electrode lead
190: Lead film
200: Gas discharge portion
210: Gas discharge film

211: Adhesive resin layer
212: Permeable resin layer
220: Through hole
230: Sealing region

**Claims**

1.  A pouch type battery case comprising:

    a cup portion provided with an accommodation space for accommodating an electrode assembly; a terrace portion formed along a perimeter of the accommodation portion; and at least one gas discharge portion, wherein the gas discharge portion is provided in at least one position among the cup portion and the terrace portion, and each gas discharge portion comprises at least one through hole and a gas permeable film covering the through hole,
    the gas permeable film comprises an adhesive resin layer and a permeable resin layer disposed on the adhesive resin layer, and
    the gas permeable film is sealed to the battery case to form a sealing region around the through hole, and each gas discharge portion has a water blocking index (WBI) of 2.0 to 10.5, indicated by Equation 1 below:

    $$[\text{Equation 1}]$$

    $$\text{WBI} = (A_S \times T_F \times T_T) / (A_H \times T_A \times 100)$$

    wherein in Equation 1 above, As is an area (mm$^2$) of the sealing region, given as a unitless number, $T_F$ is a total thickness (µm) of the gas permeable film, given as a unitless number, $T_A$ is a thickness (µm) of the adhesive resin layer, given as a unitless number, $T_T$ is a thickness (µm) of the permeable resin layer, given as a unitless number, and $A_H$ is an area (mm$^2$) of the through hole, given as a unitless number.

2.  The pouch type battery case of claim 1, wherein the water blocking index (WBI) ranges from 2.3 to 10.0.

3.  The pouch type battery case of claim 1, wherein the adhesive resin layer comprises a non-fluorinated polyolefin-based resin.

4.  The pouch type battery case of claim 1, wherein the permeable resin layer comprises a fluorinated polyolefin-based resin.

5.  The pouch type battery case of claim 1, wherein the gas permeable film has a thickness ($T_F$) of 80 µm to 500 µm.

6.  The pouch type battery case of claim 1, wherein a ratio ($T_A/T_T$) of the thickness ($T_A$) of the adhesive resin layer to the thickness ($T_T$) of the permeable resin layer ranges from 0.4 to 2.0.

7.  The pouch type battery case of claim 1, wherein a ratio ($T_A/T_T$) of the thickness ($T_A$) of the adhesive resin layer to the thickness ($T_T$) of the permeable resin layer ranges from 0.4 to 1.2.

8.  The pouch type battery case of claim 1, wherein the adhesive resin layer has a thickness ($T_A$) of 20 µm to 250 µm.

9.  The pouch type battery case of claim 1, wherein the permeable resin layer has a thickness ($T_T$) of 30 µm to 200 µm.

10.  The pouch type battery case of claim 1, wherein the through hole has an area ($A_H$) of 5 mm$^2$ to 25 mm$^2$.

11.  The pouch type battery case of claim 1, wherein the sealing portion has an area ($A_{AD}$) of 10 mm$^2$ to 40 mm$^2$.

12.  The pouch type battery case of claim 1, wherein the gas discharge portion is formed in at least one position selected from among the terrace portion, and the cup portion positioned adjacent to the terrace portion and having no internal contact with the electrode assembly.

13.  The pouch type battery case of claim 1, wherein the gas discharge portion is disposed such that the adhesive resin layer comes into contact with the pouch type battery case.

14. The pouch type battery case of claim 1, wherein the pouch type battery case has a structure in which a base layer, a gas barrier layer, and a sealant layer are sequentially stacked from an outer side.

15. A pouch type secondary battery comprising:

an electrode assembly; a pouch type battery case according to claim 1; an electrode lead connected to the electrode assembly and protruding to the outside of the pouch type battery case via the terrace portion; and a lead film disposed between the electrode lead and the pouch type battery case on the terrace portion, wherein a portion of the terrace portion is sealed along a perimeter of a cup portion to form a sealing portion.

[FIG. 1]

[FIG. 2]

[FIG. 3]

[FIG. 4]

[FIG. 5]

[FIG. 6]

[FIG. 7]

[FIG. 8]

## INTERNATIONAL SEARCH REPORT

| International application No. |
|---|
| **PCT/KR2024/018667** |

**A.    CLASSIFICATION OF SUBJECT MATTER**

**H01M 50/30**(2021.01)i; **H01M 50/105**(2021.01)i; **H01M 50/126**(2021.01)i; **H01M 50/183**(2021.01)i; **H01M 50/184**(2021.01)i; **H01M 50/186**(2021.01)i

According to International Patent Classification (IPC) or to both national classification and IPC

**B.    FIELDS SEARCHED**

Minimum documentation searched (classification system followed by classification symbols)

H01M 50/30(2021.01); H01G 9/12(2006.01); H01M 2/02(2006.01); H01M 2/12(2006.01); H01M 50/10(2021.01); H01M 50/116(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가스 배출부(gas venting part), 관통홀(through hole), 가스 투과성 필름(gas permeable film), 수분 차단 지수(water blocking index), 파우치형 전지 케이스(pouch type battery case)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0033945 A (LG CHEM, LTD.) 17 March 2022 (2022-03-17)<br>See paragraphs [0005] and [0045]-[0049] and figures 1a and 2-3. | 1-15 |
| A | KR 10-2019-0042215 A (LG CHEM, LTD.) 24 April 2019 (2019-04-24)<br>See paragraphs [0028] and [0051]-[0070] and figures 1-7. | 1-15 |
| A | KR 10-2022-0043034 A (LG ENERGY SOLUTION, LTD.) 05 April 2022 (2022-04-05)<br>See paragraphs [0035]-[0062] and figures 1-3. | 1-15 |
| A | JP 2017-220656 A (MUTSUKI DENKI K.K.) 14 December 2017 (2017-12-14)<br>See paragraphs [0017]-[0033] and figures 1-5. | 1-15 |
| A | JP 2016-103631 A (MUTSUKI DENKI K.K.) 02 June 2016 (2016-06-02)<br>See paragraphs [0016]-[0056] and figures 1-20. | 1-15 |

☐ Further documents are listed in the continuation of Box C.          ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **24 February 2025** | **24 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/018667**

| Patent document cited in search report | | | Publication date (day/month/year) | Patent family member(s) | | | Publication date (day/month/year) |
|---|---|---|---|---|---|---|---|
| KR | 10-2022-0033945 | A | 17 March 2022 | None | | | |
| KR | 10-2019-0042215 | A | 24 April 2019 | KR | 10-2425151 | B1 | 26 July 2022 |
| KR | 10-2022-0043034 | A | 05 April 2022 | CN | 115769426 | A | 07 March 2023 |
| | | | | EP | 4148886 | A1 | 15 March 2023 |
| | | | | JP | 2023-525540 | A | 16 June 2023 |
| | | | | KR | 10-2736109 | B1 | 02 December 2024 |
| | | | | US | 2023-0216133 | A1 | 06 July 2023 |
| | | | | WO | 2022-065947 | A1 | 31 March 2022 |
| JP | 2017-220656 | A | 14 December 2017 | JP | 6739027 | B2 | 12 August 2020 |
| JP | 2016-103631 | A | 02 June 2016 | JP | 6784965 | B2 | 18 November 2020 |

Form PCT/ISA/210 (patent family annex) (July 2022)